# EUROPÄISCHE PATENTSCHRIFT

(11) **EP 0 309 608 B1**
(45) Veröffentlichungstag und Bekanntmachung des Hinweises auf die Patenterteilung: **09.08.1995**
(21) Anmeldenummer: 87114374.9
(22) Anmeldetag: 02.10.1987
(51) Int. Cl.: A01C 17/00, A01C 15/04, A01C 7/08

(54) **Verteilerkopf für eine pneumatische Sämaschine**
A distribution head for a pneumatic drill
Tête de distribution pour un semoir pneumatique

(43) Veröffentlichungstag der Anmeldung: 05.04.1989
(73) Patentinhaber: Rabewerk GmbH + Co., 49152 Bad Essen (DE)
(72) Erfinder: Gehrke, Rudolf, Dipl.-Ing., D-26871 Papenburg (DE); Pleyer, Peter, D-49152 Bad Essen (DE)
(74) Vertreter: Missling, Arne, Dipl.-Ing.

(56) Entgegenhaltungen:
- EP-A- 0 061 335
- AT-B- 279 240
- AU-B- 532 913
- CA-A- 1 097 149
- DE-A- 2 519 760
- DE-A- 3 222 882

## Beschreibung

Die Erfindung betrifft einen Verteilerkopf für eine pneumatische Sämaschine gemäß dem Oberbegriff von Anspruch 1.

Derartige Vorrichtungen sind beispielsweise aus der AT-B-279 240 bekannt. Das dort beschriebene Verteilersystem ist von einem zentralen Vorratsbehälter, der an einem Schlepper angebracht sein kann, räumlich getrennt. Über eine Transportleitung wird das Saatgut durch Druckluft einem Wellrohr zugeführt, das den Verteilerkopf trägt, von dem in gleichmäßiger Umfangs-Anordnung Ansätze bzw. Stutzen für Schlauchleitungen ausgehen, welche an Säschare angeschlossen sind.

In der Praxis sind unterschiedlich breite Sämaschinen erforderlich. Deshalb und auch für die Anwendung der sogenannten Fahrgassen-Bearbeitungsweise zur Schaffung von Leitlinien für die Feldbearbeitung und zum späteren Weiterarbeiten ist es notwendig, Saatrohre immer wieder abzusperren bzw. zuzuschalten. In der DE-B-30 17 415 wird hierfür ein besonderes Steuersystem vorgeschlagen. Eine geeignete Schalteinrichtung ist ferner in der DE-A-35 30 514 offenbart.

Gebräuchlich sind nun Verteilerköpfe mit 24, 28 oder 32 Anschlüssen; sie müssen aus fertigungstechnischen Gründen mindestens zweiteilig ausgebildet werden und bestehen vorteilhaft aus Kunststoff. Die Werkzeuge zur Herstellung sind sehr teuer. Weil man z. B. für drei verschiedene Ausführungen bereits sechs Werkzeuge benötigt, rechtfertigt sich der Kostenaufwand nur bei großen Stückzahlen. Daher hat man bereits Deckel vorgesehen, die jeden zweiten Anschluß keilförmig abdecken, um das Saatgut zu den übrigen, noch offenen Anschlüssen umzulenken. Damit läßt sich jedoch die Gesamtzahl der Anschlüsse nur herabsetzen. Dasselbe gilt auch für Absperrschieber in den Schlauchleitungen, um von denjenigen Leitungen, die zu den beabsichtigten Gassen führen, das geförderte Saatgut in den Behälter zurückzuleiten. Nachteilig ist hierbei, daß vielfach eine Einzelbetätigung von Hand vorgenommen werden muß und sich eine ungleichmäßige Saatgut-Verteilung auf die Nachbarleitungen nicht sicher vermeiden läßt.

Es besteht mithin Bedarf an einer Weiterentwicklung. Aufgabe der Erfindung ist es, unter Vermeidung der Nachteile des Standes der Technik mit möglichst wirtschaftlichen Mitteln einen neuartigen Verteilerkopf zu schaffen, der für verschieden breite Sämaschinen benutzbar ist und die Anwendung der Fahrgassentechnik problemlos gestattet. Die Konstruktion soll einfach und die Handhabung zuverlässig möglich sein.

Das Prinzip der Erfindung ist im kennzeichnenden Teil von Anspruch 1 angegeben. Ausgestaltungen sind Gegenstand der Ansprüche 2 bis 21.

Erfindungsgemäß sind die Abzweige als am Verteilerkopf wahlweise ansetz- oder anbringbare Stutzen ausgebildet. Damit ist die herkömmliche starre Anordnung aufgegeben; im Gegenteil kann man den Verteilerkopf bequem den jeweiligen Bedürfnissen anpassen. Ausgehend von einem Grundaufbau, der für alle Maschinentypen gleich sein kann und somit sehr günstig zu fertigen ist, kann durch einfaches Einfügen bzw. Entnehmen von Einzelstutzen die jeweils benötigte Anzahl und Anordnung von Abzweigen geschaffen werden. Bei stark verbilligter Herstellung ist der erfindungsgemäße Verteilerkopf daher besonders vielseitig einsetzbar.

Nach Anspruch 2 können die Stutzen Einzelemente und/oder zu Baugruppen zusammengefaßt sein. Sie sind laut Anspruch 3 in bezug auf das Steigrohr so angeordnet, daß ihre Längsrichtung einen Vertikalwinkel von 90° ± 40° zur Axialrichtung des Steigrohres einschließt. Ist dies ein rechter Winkel so stehen die Stutzen in einer Querebene ab; die Erfindung zieht jedoch auch eine kegelförmige Anordnung in Betracht, wobei die Prallfläche je nach dem Vertikalwinkel konkav oder konvex gestaltet sein kann.

Die Stutzen können nach Anspruch 4 in den Verteilerkopf insbesondere radial einsteckbar und daran verrastbar sein, wobei die Rasten zweckmäßig laut Anspruch 5 in regelmäßigen Umfangsabständen angeordnet sind, bevorzugt gemäß Anspruch 6 in einer durch vier teilbaren Anzahl. Dank dieser Gruppierung sind Anzahlen von Säscharen möglich die sich jeweils von vier unterscheiden, wie es für die Abstufung verschiedener Maschinenarbeiten günstig ist.

Die Ausbildung nach Anspruch 7 ermöglicht eine gegenseitige Außen-Abstützung der Stutzen, die laut Anspruch 8 durch elastische Laschen, Distanzstücke oder dergleichen bewirkt werden kann. Kopfseitig können die Stutzen gemäß Anspruch 9 elastische Zungen aufweisen, vorteilhaft nach Anspruch 10 derart, daß jeweils der Rand einer spitz auslaufenden Zunge von einem Bördelrand einer benachbarten Zunge übergriffen wird. Dies ermöglicht ein schnelles und zuverlässiges Verrasten jedes einzelnen Stutzens im Verteilerkopf. Die Distanzierung der Stutzen wird dabei durch die Verrastung gewährleistet. Eine zusätzliche Außen-Abstützung kann eine unterschiedliche Distanzierung unterstützen. Wichtig ist die Maßnahme von Anspruch 11, wonach die Zungen bzw. Stützlaschen so angeordnet und ausgebildet sind, daß verschieden enges Einstecken der Stutzen bei ausreichender Dichtigkeit möglich ist. Damit ist gewährleistet, daß irgendeine bestimmte Anordnung andere notwendige Aufteilungen nicht stören kann. Bevorzugt sind die Stutzen gemäß Anspruch 12 in gleichmäßiger Umfangsverteilung an dem Verteilerkopf angeordnet, was jedenfalls im Eintrittsbereich der Stutzen auch dann möglich ist, wenn die Stutzenenden bei dichter Packung, etwa in Zweier- oder Dreiergruppen, im Inneren des Verteilerkopfes etwas ungleichmäßig verteilt sind.

Um für Fahrgassen einzelne Abzweige zu schließen, wurden herkömmlich Ventile in den Schlauchleitungen benutzt. Die Erfindung sieht hingegen gemäß Anspruch 13 vor, daß einzelne oder alle Stutzen insbesondere an ihrer Unterseite eine schwenkbare Klappe aufweisen. Sie liegt also bevorzugt der Prallfläche gegenüber und kann laut Anspruch 14 im wesentlichen eben und am Mittelteil des Stutzens außen gelagert sein. Nach Anspruch 15 können die Stutzen parallel zu ihrer Längsrichtung wenigstens eine ebene Fläche aufweisen, die eine mit der Klappe verschließbare Öffnung hat. Auf diese Weise ist mit einfachen Mitteln gewährleistet, daß die Saatgut-Zuleitung zu den Scharen hin absperrbar ist und das geförderte Saatgut in den Behälter zurückfallen kann.

Gemäß Anspruch 16 ist vorgesehen, daß die Platte mittels einer Rastfeder in Öffnung- und/oder Schließstellung fixierbar ist. Das ermöglicht eine Dauereinstellung beispielsweise für das Erzeugen bestimmter Fahrgassen. Die Rastfeder ist zweckmäßig nach Anspruch 17 ein Drahtbügel, dessen mittlerer, abgekröpfter Teil an der Platte angreift, wobei wenigstens ein Federschenkel kraftschlüssig an einem Nocken des Stutzens festlegbar ist. Vorteilhaft sind laut Anspruch 18 außen am Stutzen zwei Nocken in solchem Längsabstand zueinander angebracht, daß die Platte in Öffnungs- bzw. Schließstellung arretierbar ist.

Zum Betätigen einzelner oder aller Klappen kann laut Anspruch 19 eine hand- und/oder fernbetätigbare Stelleinrichtung vorhanden sein. Damit kann mittels einer Schaltanordnung beispielsweise vom Schlepper her mit einer einzigen Steuerleitung die wahlweise Betätigung ausgewählter oder aller Klappen bequem durchgeführt werden. Will man etwa für zwei Schlepperreifen und zwar für die Breite eines Schlepperreifens jeweils zwei Säschare absperren, so könnten je zwei Klappen über nur einen Elektromagneten betätigt werden. Auch das gemeinsame Verschließen von je drei Stutzen ist ohne weiteres möglich. Durch Einzelbetätigung lassen sich überdies unterschiedliche Spurweiten berücksichtigen.

Eine wichtige Gestaltung nach Anspruch 20 besteht darin, daß der Verteilerkopf ein zwei- oder mehrteiliges Gehäuse hat, wobei ein auf das Steigrohr aufsteckbarer Unterteil durch einen abnehmbaren Deckel axial abgeschlossen ist, der die Prallfläche aufweist oder bildet. Der Verteilerkopf ist also in sehr einfacher Weise zusammensetzbar aus einem Unterteil und einem Oberteil mit dazwischen nach Bedarf einfügbarem, sicher gehaltenen Stutzen. Dieser Aufbau gewährleistet bequeme Montage bzw. Demontage, so daß auch die Wartung stark erleichert ist. Zweckmäßig besitzt der Unterteil nach Anspruch 21 einen Flansch, der mit Rastbohrungen für unterschiedliche Anzahlen von Stutzen-Rasten versehen ist. Dies gestattet sowohl sichere Handhabung als auch gute Zugänglichkeit für die Instandhaltung.

Weitere Merkmale, Vorteile und Einzelheiten der Erfindung ergeben sich aus dem Wortlaut der Ansprüche sowie aus der folgenden Beschreibung von Ausführungsbeispielen anhand der Zeichnung. Darin zeigen:
- Fig. 1: ein Teilschema einer Sämaschine mit aufgestecktem Verteilerkopf,
- Fig. 2: eine Teil-Schnittansicht eines Verteilerkopfes,
- Fig. 3: einen Axialschnitt durch einen Verteilerkopf nach der Erfindung,
- Fig. 4: eine Seiten-Schnittansicht eines Stutzens sowie
- Fig. 5a: eine Draufsicht und
- Fig. 5b: eine Seitenansicht einer Klappe für einen Stutzen gemäß Fig. 4.

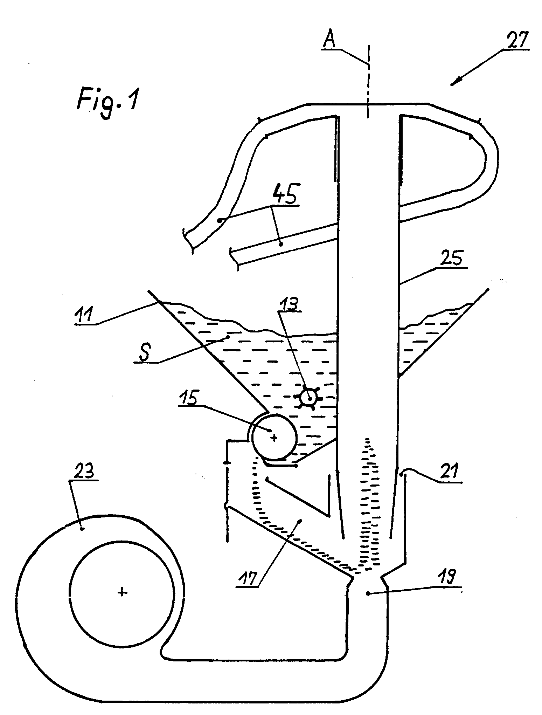

Schematisch ist in Fig. 1 der Aufbau einer Sämaschine skizziert. Sie hat einen Behälter 11 mit einer Rührwelle 13 und einem Dosierrad 15, das einen Zulauf 17 mit Saatgut S beschickt. Eine Düse 19 ist über eine Zuleitung mit einem Gebläse 23 verbunden. Durch die Verengung der Düse 19 wird die Strömungsgeschwindigkeit von durch das Gebläse 23 zugeführter Druckluft erhöht, so daß im nachgeordneten Raum ein Unterdruck entsteht und durch Schlitze 21 im Bereich des unteren Endes des Steigrohres 25 von außen Luft angesaugt wird. Auf dem Steigrohr 25 ist ein Verteilerkopf 27 angebracht, der mit einer Anzahl von Abzweigen versehen ist, von denen Schlauchleitungen 45 zu (nicht dargestellten) Säscharen gehen.

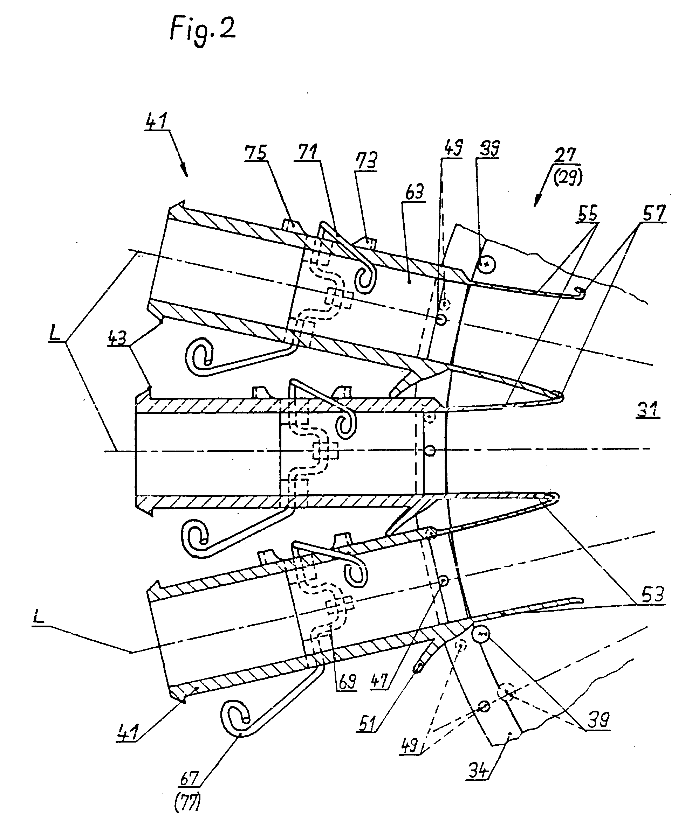

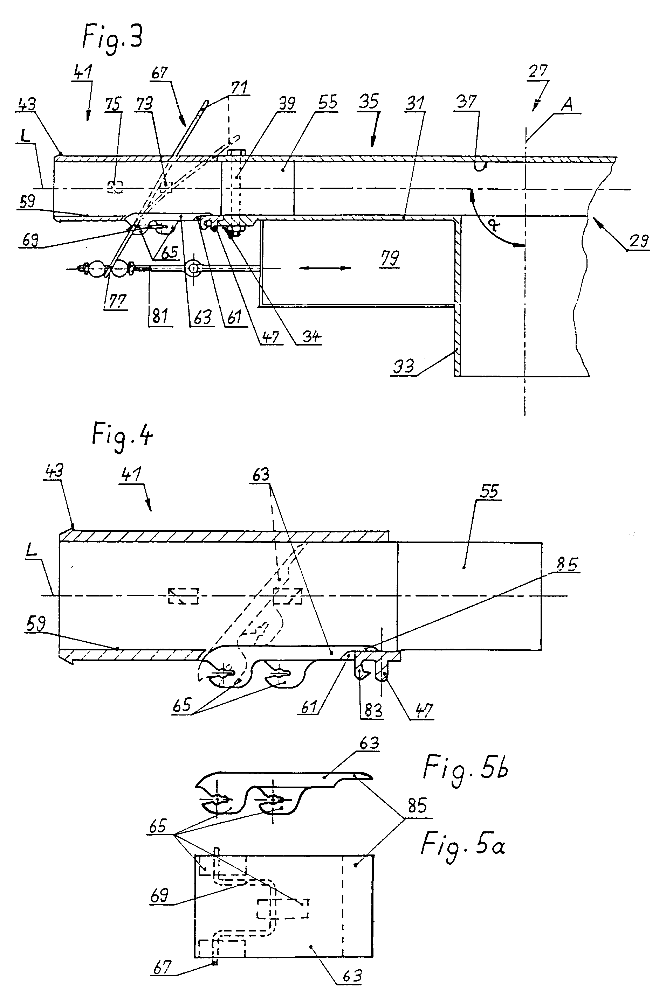

Einzelheiten einer Ausführungsform eines Verteilerkopfes 27 sind aus Fig. 2 und 3 ersichtlich. Er hat ein Gehäuse 29 mit einem Unterteil 31, der einen Rohransatz 33 aufweist, womit der Verteilerkopf 27 auf das Steigrohr 25 aufsteckbar ist.

Ferner hat der Unterteil 33 einen Flansch 34, der mit Rast- und Befestigungsmitteln für einsteckbare Stutzen 41 versehen ist. Ein Deckel 35, der innen eine Prallfläche 37 haben kann, ist mittels Befestigungsschrauben 39 um Unterteil 31 des Verteilerkopfes 27 befestigbar.

Die Stutzen 41 haben einen Kragen 43, an denen das eine Ende der Schlauchleitungen 45 festlegbar ist. Mittels Zapfen 47 können die Stutzen 41 in unterschiedlicher Anordnung (Umfangsverteilung) an Rastbohrungen 49 des Flansches 34 festgelegt werden.

Die einzelnen Stutzen 41 können sich außen gegenseitig mittels Distanzstücken, die hier vorzugsweise von elastischen Stützlaschen 51 gebildet sind, aneinander abstützen. Sie sind radial nach innen in den Verteilerkopf 27 einsteckbar, wobei elastische Zungen 53, 55 eine innere Verbindung schaffen. Während die einen Zungen 53 spitz auslaufen, sind die jeweils diametral gegenüberliegenden Zungen 55 mit einem Bördelrand 57 versehen, der das spitz auslaufende Ende der jeweils benachbarten Zunge 53 übergreift. Die Seitenkanten der Zungen 53, 55 liegen einerseits am Unterteil 31, andererseits am Deckel 35 des Gehäuses 29 an, so daß die in den gewählten Umfangsabständen montierten Stutzen 41 gegeneinander zuverlässig abgedichtet sind.

Jeder Stutzen 41 hat vorzugsweise wenigstens eine ebene Fläche 59 (Fig. 3 und 4), die eine Öffnung 61 aufweist, welche mittels einer Klappe 63 wahlweise freigeb- bzw. verschließbar ist. Die Klappe 63 hat Ansätze 65 (Fig. 4, 5a, 5b), die einerseits der Schwenklagerung und andererseits der Aufnahme einer als Drahtbügel ausgebildeten Rastfeder 67 dienen. Die Rastfeder 67 kann auch günstigerweise in die Klappe 63 eingespritzt sein; dann können die Ansätze 65 entfallen.

Zur Festlegung der Rastfeder 67 kann diese eine Abkröpfung 69 haben, die außen an der Klappe 63 festlegbar ist. Ein Rastschenkel 71 läßt sich wahlweise an einen von zwei Nocken 73, 75 (Fig. 2 und 3) klemmen. Ein Zugschenkel 77 der Rastfeder 67 ist mittels einer (in Fig. 3 schematisch angedeuteten) Stelleinrichtung 79 betätigbar, und zwar mittels eines einstellbaren Zugglieds 81. Eine Lippe 85 (Fig. 4, 5a, 5b) der Klappe 63 ermöglicht den dichten Verschluß der Öffnung 61 in der Schließstellung der Klappe. Der sicheren Verrastung des Stutzens 41 an dem Flansch 34 des Unterteils 31 dienen im dargestellten Ausführungsbeispiel jeweils neben den Zapfen 47 befindliche Krallen 83 (Fig. 4).

Man erkennt, daß der erfindungsgemäße Verteilerkopf 27 den Anschluß unterschiedlich vieler Stutzen 41 in wählbarer Umfangsverteilung ermöglicht, wobei die elastischen Zungen 53, 55 unterschiedliche Abstände ermöglichen und die gegenseitige Abdichtung im Gehäuse 29 bewirken. Die Montage geht einfach und schnell vor sich; der mittels Schrauben 39 befestigte Deckel 35 gewährleistet eine zuverlässige Halterung.

Es ist möglich und erfindungsgemäß vorgesehen, daß die Stutzen 41 zumindest im Mittelteil etwa rechteckigen oder quadratischen Querschnitt haben. Sie weisen bevorzugt zumindest eine ebene Fläche 59 auf, deren Öffnung 61 mittels der Klappe 63 verschließbar ist. Allerdings kann der Querschnitt der Rohrleitung auch kreisrund sein; in solchem Falle sieht die Erfindung eine Klappe 63 vor, die im Querschnitt entsprechende Bogenform hat.

Zweckmäßig durchsetzt das Steigrohr 25 den Behälter 11. Dank dieser Anordnung ist auf einfachste Weise erreicht, daß in der Öffnungsstellung der Klappe 63 das vom Luftstrom des Gebläses 23 geförderte Saatgut durch die Öffnung 61 in den Behälter 11 zurückfällt.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

## Patentansprüche

1. Verteilerkopf für eine pneumatische Sämaschine mit einer Deckenfläche (35) und einem Unterteil (31) zur Anbringung auf einem Steigrohr (25), dem durch eine Fördereinrichtung (15,17,19) Saatgut (S) aus einem Behälter (11) zugeführt wird, um es mittels Druckluft über eine Prallfläche (37) auf Abzweige zu verteilen, an die zu Säscharen führende Schlauchleitungen (45) anschließbar sind, dadurch gekennzeichnet, daß die Abzweige als am Verteilerkopf (27) wahlweise zwischen der Deckenfläche (35) und dem Unterteil (31) anbringbare Stutzen (41) ausgebildet sind, und daß die Seitenflächen (53,55) benachbarter Stutzen derart dichtend aneinanderliegen, daß ein Austritt von Saatgut verhindert ist.

2. Verteilerkopf nach Anspruch 1, dadurch gekennzeichnet, daß die Stutzen (41) Einzelelemente und/oder zu Baugruppen zusammengefaßt sind.

3. Verteilerkopf nach Anspruch 1 oder 2, gekennzeichnet durch solche Anbringung der Stutzen (41) in bezug auf das Steigrohr (25), daß ihre Längsrichtung (L) einen Vertikalwinkel (α, Fig. 3) von 90° ± 40° zur Axialrichtung (A) des Steigrohres einschließt.

4. Verteilerkopf nach einem der Ansprüche 1 bis 3, dadurch gekennzeichnet, daß die Stutzen (41) in den Verteilerkopf (27) insbesondere radial einsteckbar und daran verrastbar sind.

5. Verteilerkopf nach Anspruch 4, dadurch gekennzeichnet, daß am Verteilerkopf (27) Rasten (47, 49) für die Stutzen (41) in regelmäßigen Umfangsabständen angeordnet sind.

6. Verteilerkopf nach Anspruch 5, dadurch gekennzeichnet, daß die Rasten (47, 49) in einer durch vier teilbaren Anzahl (z. B. 28, 32 usw.) vorhanden sind.

7. Verteilerkopf nach einem der Ansprüche 1 bis 6, dadurch gekennzeichnet, daß für jeden Stutzen (41) an oder nahe einem Steckteil wenigstens eine Außen-Abstützung (51) vorgesehen ist.

8. Verteilerkopf nach Anspruch 7, dadurch gekennzeichnet, daß die bzw. jede Außen-Abstützung (51) elastisch und als außen abstehende Lasche, als an den Stutzen angeformtes Distanzstück oder dergleichen ausgebildet ist.

9. Verteilerkopf nach wenigstens einem der Ansprüche 1 bis 8, dadurch gekennzeichnet, daß die Stutzen (41) kopfseitig elastische Zungen (53, 55) aufweisen.

10. Verteilerkopf nach Anspruch 9, dadurch gekennzeichnet, daß jeweils einer spitz auslaufenden Zunge (53) eine mit einem Bördelrand (57) versehene Zunge (55) gegenüberliegt, wobei der Rand der spitz auslaufenden Zunge (53) in den Bördelrand (57) der benachbarten Zunge (55) eingreift.

11. Verteilerkopf nach wenigstens einem der Ansprüche 7 bis 10, gekennzeichnet durch solche Anordnung und Ausbildung der Zungen (53, 55) bzw. Stützlaschen (51), daß verschieden enges Einstecken der Stutzen (41) bei ausreichender Dichtigkeit möglich ist.

12. Verteilerkopf nach Anspruch 11, dadurch gekennzeichnet, daß die Stutzen (41) in gleichmäßiger Umfangsverteilung an dem Verteilerkopf (27) angeordnet sind.

13. Verteilerkopf nach wenigstens einem der Ansprüche 1 bis 12, dadurch gekennzeichnet, daß einzelne oder alle Stutzen (41) eine schwenkbare Klappe (63) aufweisen, insbesondere an der Unterseite der Stutzen.

14. Verteilerkopf nach Anspruch 13, dadurch gekennzeichnet, daß die Klappe (63) im wesentlichen eben und namentlich am Mittelteil des Stutzens (41) außen gelagert ist.

15. Verteilerkopf nach Anspruch 13 oder 14, dadurch gekennzeichnet, daß die Stutzen (41) parallel zu ihrer Längsrichtung (L) wenigstens eine ebene Fläche (59) aufweisen, die eine mit der Klappe (63) verschließbare Öffnung (61) hat.

16. Verteilerkopf nach einem der Ansprüche 13 bis 15, dadurch gekennzeichnet, daß die Klappe (63) mittels einer Rastfeder (67) in Öffnungs- und/oder Schließstellung fixierbar ist.

17. Verteilerkopf nach Anspruch 16, dadurch gekennzeichnet, daß die Rastfeder (67) ein Drahtbügel ist, dessen mittlerer, abgekröpfter Teil (69) an der Klappe (63) angreift, und daß wenigstens ein Federschenkel (71) kraftschlüssig an einem Nocken (73 bzw. 75) des Stutzens (41) festlegbar ist.

18. Verteilerkopf nach Anspruch 17, dadurch gekennzeichnet, daß außen am Stutzen (41) zwei Nocken (73, 75) in solchem Längsabstand zueinander angebracht sind, daß die Klappe (63) in Öffnungs- bzw. Schließstellung arretierbar ist.

19. Verteilerkopf nach wenigstens einem der Ansprüche 13 bis 18, dadurch gekennzeichnet, daß zum Betätigen einzelner oder aller Klappen eine hand- und/oder fernbetätigbare Stelleinrichtung (79) vorhanden ist.

20. Verteilerkopf nach einem der Ansprüche 1 bis 19, dadurch gekennzeichnet, daß der Verteilerkopf aus einem zwei- oder mehrteiligen Gehäuse (29) mit einem auf das Steigrohr (25) aufsteckbaren Unterteil (31) und aus einer lösbaren am Unterteil (31) befestigbaren und die Prallfläche (37) aufweisenden oder bildenden Deckel (35) besteht und daß die Stutzen (41) zwischen Unterteil (31) und Oberteil gehaltert sind.

21. Verteilerkopf nach Anspruch 20, dadurch gekennzeichnet, daß der Unterteil (31) einen Flansch (34) aufweist, der mit Rastbohrungen (49) für unterschiedliche Anzahlen von Stutzen-Rasten (47) versehen ist.

## Claims

1. A distributing head for a pneumatic sowing machine, having a cover surface (35) and a lower part (31) for mounting on an ascending pipe (25) to which seed (S) from a receptacle (11) is supplied by means of a conveying device (15, 17, 19) so as to be distributed, by means of compressed air and via a deflecting surface (37), to connections to which there can be attached hose lines (45) leading to coulters, characterised in that the connections are in the form of connection pieces (41) which can be fitted to the distributing head (27) at desired sites between the cover surface (35) and the lower part (31), and in that the lateral surfaces (53, 55) of adjacent connection pieces lie imperviously against one another in such a manner that the exit of seed is prevented.

2. A distributing head in accordance with Claim 1, characterised in that the connection pieces (41) are individual elements and/or are combined into groups of parts.

3. A distributing head in accordance with Claim 1 or 2, characterised by the connection pieces (41) being fitted in such a manner in relation to the ascending pipe (25) that their longitudinal direction (L) forms a vertical angle ( α Fig. 3) of 90° ± 40° with the axial direction (A) of the ascending pipe.

4. A distributing head in accordance with any one of Claims 1 to 3, characterised in that the connection pieces (41) can be inserted, in particular radially, into the distributing head (27) and locked thereto.

5. A distributing head in accordance with Claim 4, characterised in that locking means (47, 49) for the connection pieces (41) are arranged at regular intervals on the circumference of the distributing head (27).

6. A distributing head in accordance with Claim 5, characterised in that the locking means (47, 49) are present in a number divisible by four (e.g. 28, 32 etc.).

7. A distributing head in accordance with any one of Claims 1 to 6, characterised in that for each connection piece (41) there is at least one outer support (51) provided on or close to an insertion part.

8. A distributing head in accordance with Claim 7, characterised in that the or each outer support (51) is resilient and is in the form of a spacer moulded on the connection piece, an outwards-projecting tab or the like.

9. A distributing head in accordance with at least one of Claims 1 to 8, characterised in that the connection pieces (41) have resilient tongues (53, 55) at the side nearest the head.

10. A distributing head in accordance with Claim 9, characterised in that in each case a tongue (55) provided with a flanged edge (57) faces a tapering tongue (53), the edge of the tapering tongue (53) engaging into the flanged edge (57) of the adjacent tongue (55).

11. A distributing head in accordance with at least one of Claims 7 to 10, characterised by such an arrangement and design of the tongues (53, 55) and supporting tabs (51) that the insertion proximity of the connection pieces (41) can differ with sufficient impermeability still being obtained.

12. A distributing head in accordance with Claim 11, characterised in that the connection pieces (41) are arranged on the distributing head (27) so as to be distributed uniformly over its circumference.

13. A distributing head in accordance with at least one of Claims 1 to 12, characterised in that individual or all connection pieces (41) have a pivotable flap (63), in particular on the underside of the connection pieces.

14. A distributing head in accordance with Claim 13, characterised in that the flap (63) is substantially planar and is in particular mounted on the exterior of the central part of the connection piece (41).

15. A distributing head in accordance with Claim 13 or 14, characterised in that the connection pieces (41) have at least one planar surface (59) parallel to their longitudinal direction (L), this planar surface (59) having an opening (61) closable by means of the flap (63).

16. A distributing head in accordance with any one of Claims 13 to 15, characterised in that the flap (63) can be fixed in an opening and/or closing position by means of a catch spring (67).

17. A distributing head in accordance with Claim 16, characterised in that the catch spring (67) is a bent piece of wire whose central bent part (69) engages on the flap (63), and in that at least one spring leg (71) can be made fast in a friction-locking manner on a lug (73 or 75 as the case may be) of the connection piece (41).

18. A distributing head in accordance with Claim 17, characterised in that two lugs (73, 75) are mounted on the exterior of the connection piece (41) at such a longitudinal distance from one another that the flap (63) can be locked in the opening or closing position.

19. A distributing head in accordance with at least one of Claims 13 to 18, characterised in that a manually-operable and/or remote-controllable adjusting device (79) is present for the operation of individual or all flaps.

20. A distributing head in accordance with any one of Claims 1 to 19, characterised in that the distributing head is composed of both a two-part or multi-part housing (29) with a lower part (31) which can be mounted onto the ascending pipe (25) and a cover (35) which is detachably securable to the lower part (31) and has or forms the deflecting surface (37), and in that the connection pieces (41) are made fast between lower part (31) and upper part.

21. A distributing head in accordance with Claim 20, characterised in that the lower part (31) has a flange (34) provided with locking bores (49) for differing numbers of connection piece locking means (47).

## Revendications

1. Tête de distribution pour un semoir pneumatique, comportant un couvercle (35) et une partie inférieure (31) destinée à la fixation sur un tube ascendant (25) auquel sont amenées, à l'aide d'un dispositif de transport (15, 17, 19), des semences provenant d'un réservoir (11), afin qu'elles soient réparties au moyen d'air comprimé, à l'aide d'une surface de rebond (37) entre des embranchements auxquels on peut raccorder des tuyauteries souples (45) conduisant vers des socs du semoir,
caractérisée en ce que les embranchements sont réalisés en forme de raccords (41) montables à volonté sur la tête de distribution (27) entre le couvercle (35) et la partie inférieure (31),
et en ce que les faces latérales (53,55) de raccords adjacents s'appliquent l'une contre l'autre de manière suffisamment étanche pour empêcher toute fuite des semences.

2. Tête de distribution selon la revendication 1, caractérisée en ce que les raccords (41) sont des éléments distincts et/ou qu'ils sont rassemblés pour constituer des groupes.

3. Tête de distribution selon la revendication 1 ou 2, caractérisée en ce que les raccords (41) sont fixés, par rapport au tube ascendant (25) de telle manière que leur direction longitudinale (1) forme avec la direction axiale (A) dudit tube ascendant un angle de 90 ± 40° (α, figure 3) dans un plan vertical.

4. Tête de distribution selon l'une des revendications 1 à 3, caractérisée en ce que que les raccords (41) sont enfichables dans la tête de distribution (27), en particulier dans le sens radial, et peuvent y être fixés par encliquetage.

5. Tête de distribution selon la revendication 4, caractérisée en ce que sur le pourtour de ladite tête de distribution (27) sont disposés a des intervalles réguliers des encoches (47, 49) pour les raccords (41).

6. Tête de distribution selon la revendication 5, caractérisée en ce que le nombre des encoches (47, 49) présentes est divisible par quatre (par exemple égal à 28, 32 etc.).

7. Tête de distribution selon l'une des revendications 1 à 6, caractérisée en ce que pour chaque raccord (41) est prévu au moins une pièce d'appui extérieure (51) placée sur une partie enfichable ou à proximité de celle-ci.

8. Tête de distribution selon la revendication 7, caractérisée en ce que ladite (ou chaque) pièce d'appui extérieure (51) est réalisée sous la forme d'une patte faisant saillie vers l'extérieur, d'une pièce d'écartement moulée sur le raccord ou d'un élément analogue.

9. Tête de distribution selon au moins l'une des revendications 1 à 8, caractérisée en ce que que les raccords (41) présentent du côté de la tête des languettes élastiques (53, 55).

10. Tête de distribution selon la revendication 9, caractérisée en ce qu'à chaque languette (53) à bord vif fait face une languette (55) munie d'un bord relevé (57), le bord vif de la languette (53) venant en prise avec ledit bord relevé (57) de la languette adjacente (55).

11. Tête de distribution selon au moins l'une des revendications 7 à 10, caractérisée en ce que les languettes (53, 55) et les pattes de renfort (51) sont disposées et conformées de telle sorte à permettre d'enficher les raccords (41) de façon plus ou moins serrée tout en conservant une étanchéité suffisante.

12. Tête de distribution selon la revendication 11, caractérisée en ce que que les raccords (41) sont répartis de manière régulière sur le pourtour de la tête de distribution.

13. Tête de distribution selon au moins l'une des revendications 1 à 12, caractérisée en ce que certains ou tous les raccords (41) présentent un clapet basculant (63), situé en particulier sur le côté inférieur desdits raccords.

14. Tête de distribution selon la revendication 13, caractérisée en ce que le clapet 63 est sensiblement plan et monté plus précisément sur la partie centrale du raccord (41) extérieurement.

15. Tête de distribution selon les revendications 13 ou 14, caractérisée en ce que les raccords (41) présentent, parallèlement à leur direction longitudinale (L), au moins une face plane (59) laquelle est munie d'un orifice (61) obturable au moyen du clapet (63).

16. Tête de distribution selon l'une des revendications 13 à 15, caractérisée en ce que le clapet (63) est bloquable en position d'ouverture et/ou de fermeture au moyen d'un ressort (67) d'encliquetage.

17. Tête de distribution selon la revendication 16, caractérisée en ce que le ressort (67) est un fil métallique recourbé dont la partie courbe (69) agit sur le clapet (63) et en ce qu'au moins une branche (71) de ce ressort peut être appliquée et agir sur une came (73 ou 75) du raccord (41).

18. Tête de distribution selon la revendication 17, caractérisée en ce que sur le raccord (41) sont fixées du côté extérieur deux cames (73, 75), dont les distances relatives dans le sens longitudinal sont telles que le clapet (63) est bloquable en position d'ouverture ou en position de fermeture.

19. Tête de distribution selon au moins l'une des revendications 13 à 18, caractérisée en ce que que pour la manoeuvre de certains ou de tous les clapets est prévu un dispositif de commande manuel et/ou à distance.

20. Tête de distribution selon l'une des revendications 1 à 19, caractérisée en ce que la tête de distribution est constituée d'un carter (29) fait de deux ou de plusieurs parties, qui comporte une partie inférieure (31) emmanchable sur le tube ascendant (31), ainsi que d'un couvercle (35) amovible, qui peut être fixé sur ladite partie inférieure (31) et présente, ou forme lui-même, la surface de rebond (37), et en ce que les raccords (41) sont maintenus en place entre ladite partie inférieure et une partie supérieure.

21. Tête de distribution selon la revendication 20, caractérisée en ce que la partie inférieure (31) présente une bride (34) qui est munie de perçages d'encastrement (49) pour recevoir un nombre variable de tétons d'encastrement (47 prévus sur les raccords.
